# EUROPÄISCHE PATENTSCHRIFT

(11) **EP 1 104 351 B1**
(45) Veröffentlichungstag und Bekanntmachung des Hinweises auf die Patenterteilung: **17.03.2004**
(21) Anmeldenummer: 00935174.3
(22) Anmeldetag: 06.06.2000
(51) Int. Cl.: B60B 3/06, B60B 3/04, B60B 3/10, B22C 9/28

(54) **RAD FÜR EIN KRAFTFAHRZEUG**
MOTOR-VEHICLE WHEEL
ROUE POUR VEHICULE AUTOMOBILE

(30) Priorität: 11.06.1999 DE 19926575
(43) Veröffentlichungstag der Anmeldung: 06.06.2001
(73) Patentinhaber: Dr. Ing. H.C.F. Porsche Aktiengesellschaft, 70435 Stuttgart (DE)
(72) Erfinder: HUMMEL, Frank, D-72800 Eningen (DE); STACH, Jens, D-71296 Heimsheim (DE)
(86) Internationale Anmeldenummer: PCT/EP2000/005178
(87) Internationale Veröffentlichungsnummer: WO 2000/076786

(56) Entgegenhaltungen:
- EP-A- 0 826 442
- EP-A- 0 922 591
- WO-A-99/39923
- DE-A- 4 138 558
- DE-C- 19 501 508
- US-A- 3 253 862

## Beschreibung

Die Erfindung bezieht sich auf ein Rad für ein Kraftfahrzeug nach dem Oberbegriff des Anspruchs 1.

Aus der gattungsbilden den DE 41 38 558 A1 ist ein Rad für ein Kraftfahrzeug bekannt, bei dem der Felgenstern mit Hohlspeichen ausgeführt ist, die mittels eines entfernbaren Sandkernes im Gußverfahren hergestellt werden. Der Sandkern ist freiliegend zwischen einer Unter- und Oberkokille angeordnet. Desweiteren ist aus der US 3,253,862 ein Fahrzeugrad bekannt, das innerhalb von Speichenhohlräumen Metallwolle aufweist. Femer ist aus der DE 195 01 508 C1 ein Achsschenkel für eine Kraftfahrzeugachse bekannt, der in einem Hohlraum Aluminiumschaum aufweist.

Aufgabe der Erfindung ist es, ein Rad für ein Kraftfahrzeug mit einem Felgenstern und einer Felge zu schaffen, bei der in dem Felgenstern Hohlspeichen angeordnet sind, die in einfacher Weise mit einem verbleibenden Kern bzw. mit einem entfernbaren Kern herstellbar sind.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß mit einfachen Gießtechniken in einem Kokillenwerkzeug ein Felgenstern mit Hohlspeichen und/oder anschließenden Ringräumen im Nabenbereich und/oder im Hornbereich der Felge bzw. des Felgensterns entweder mit einem verbleibenden Kern, beispielsweise aus einem Metallschaum oder mit einem entfernbaren Kern, beispielsweise aus Sand herstellbar ist.

Bei einem Felgenstern mit radial nach außen hin offenen Hohlspeichen im Felgenstern ist eine Kernlagerung erforderlich, damit im Gießzustand ein über den Umfang des Felgensterns radial herausragendes Kernteil abgestützt wird; sei es nun ein Kernteil aus Metallschaum oder aus einem Sand. Hierzu ist in der Oberkokille des Werkzeugs eine entsprechende Aussparung vorgesehen, die von der Unterkokille dicht abgeschlossen ist.

Damit in einfacher Weise eine Verbindung mit einer Felge als zweiteiliges Rad erfolgen kann, ist der Felgenstern mit einer innenseitigen oder außenseitigen vorragenden Wandung bzw. Ring-Randfläche gegenüber der weiteren Wandung ausgeführt.

Hierdurch wird erreicht, daß die Ring-Randfläche des Felgenstern mit einer Schulter der Felge in einfacher Weise verbindbar ist, die sich mit einer aufrechten Ringfläche an der Ring-Randfläche des Felgensterns anlegt und mit einer Felgenunterfläche den Kern bzw. die Öffnung der Hohlspeiche von oben her abdeckt.

Damit sichtbar wird, daß Hohlräume in den Speichen des Felgensterns vorhanden sind, kann die Speiche des Felgensterns eine dem Felgenhornbereich zugerichtete und von außen sichtbare Öffnung vorgesehen sein. Desweiteren könnte auch im Nabenbereich an der Außenseite der Hohlspeiche eine Öffnung angeordnet werden.

Ausführungsbeispiele der Erfindung sind in den Zeichnungen dargestellt und werden im folgenden näher beschrieben.

Es zeigen
- Fig. 1: einen Schnitt durch eine Hohlspeiche eines Felgensterns, der in einem Kokillenwerkzeug angeordnet ist und ein herausragendes Kernteil aus einem Metallschaum besitzt,
- Fig. 2: einen Schnitt durch eine Hohlspeiche eines Felgensterns, der in einem Kokillenwerkzeug angeordnet ist und ein herausragendes entfernbares Kernteil aus einem Sand aufweist,
- Fig. 3: einen Schnitt durch ein zweiteiliges Rad mit einem kernfreien Hohlraum und eine Verbindung der Felge an einer außenliegenden Ring-Randfläche,
- Fig. 4: einen Schnitt durch ein zweiteiliges Rad mit einem kernfreien Hohlraum im Felgenstern und einer Verbindung der Felge an einer außenliegenden Ring-Randfläche und

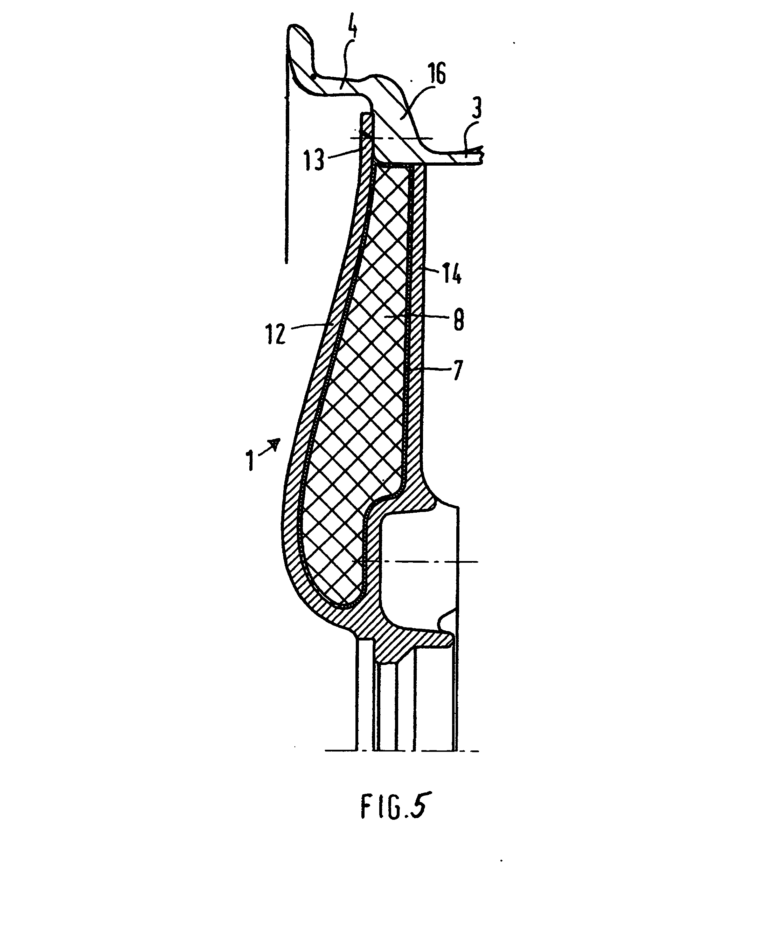

- Fig. 5: einen Schnitt durch ein zweiteiliges Rad mit einer Hohlspeiche des Felgensterns und einem verbleibenden Kern in einem geschlossenen Hohlraum.

Ein Rad für ein Kraftfahrzeug besteht im wesentlichen aus einem Felgenstern 1, in dem eine Radnabe 2 angeordnet ist und mit dem eine Felge 3 sowie ein Felgenhorn 4 einstückig oder mehrteilig verbunden ist. Das Rad wird im Gießverfahren in einem Kokillenwerkzeug, im wesentlichen bestehend aus einer Unterkokille 5 und einer Oberkokille 6 hergestellt.

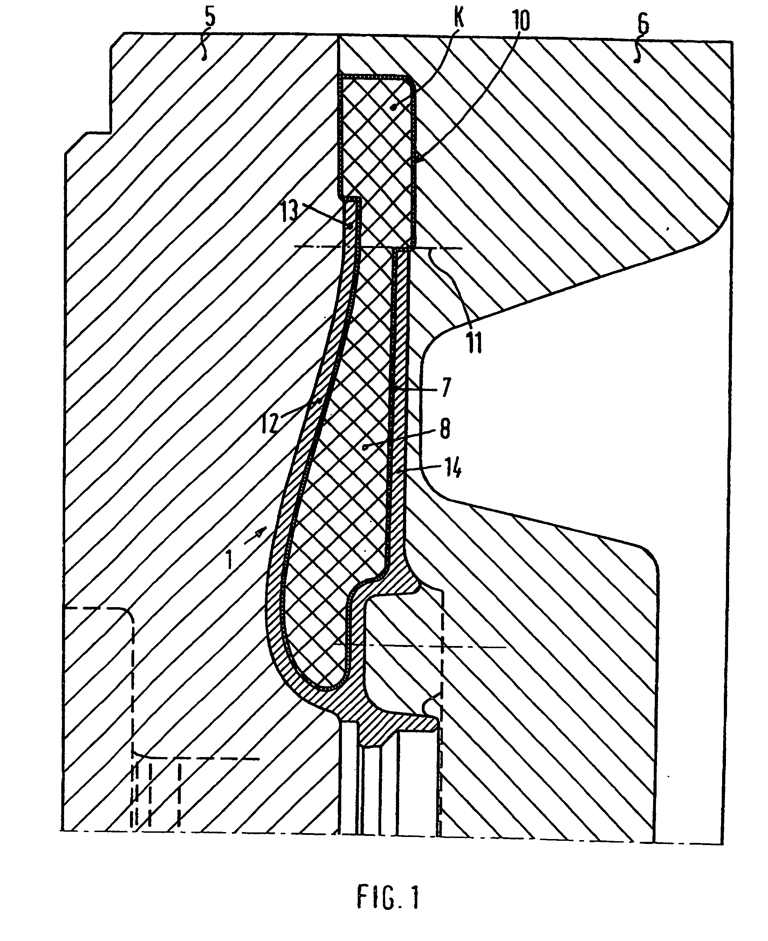

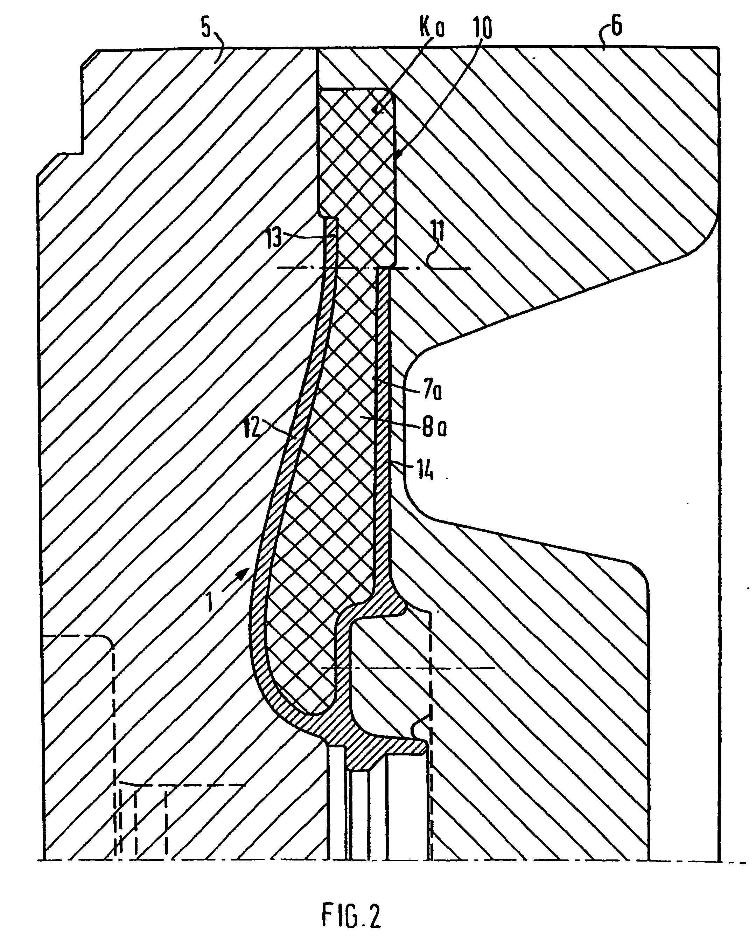

In den Fig. 1 und 2 ist das Kokillenwerkzeug 5, 6 zum Gießen des Rades näher dargestellt, in dem in einem Hohlraum 7 der Felgenstem 1 gemäß Fig. 1 einen verbleibenden Kern 8 und im Hohlraum 7a einen entfernbarer Sandkern 8a angeordnet ist. Der verbleibende Kern 8 kann aus einem Metallschaum oder einer ähnlichen Masse bestehen.

Der Kern 8; 8a ragt mit einem Kernteil K; Ka über den Umfang des Felgensterns 1 hinaus und ist zwischen der Unter- und Oberkokille 5, 6 in einer Aussparung 10 der Oberkokille 6 gelagert. Wie Fig. 1 näher zeigt, wird das Kernteil K des verbleibenden Kernes 8 über den Umfang in Höhe der strichpunktierten Linie 11 abgeschnitten. Der Kern 8a wird über eine stirnseitige Öffnung in der Speiche 1 entfernt.

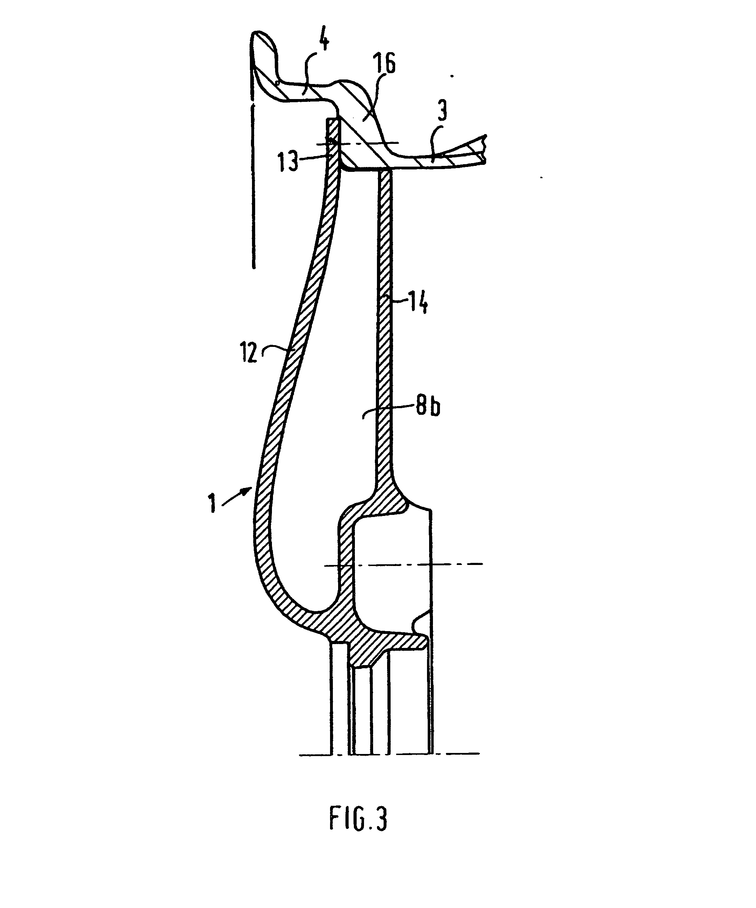

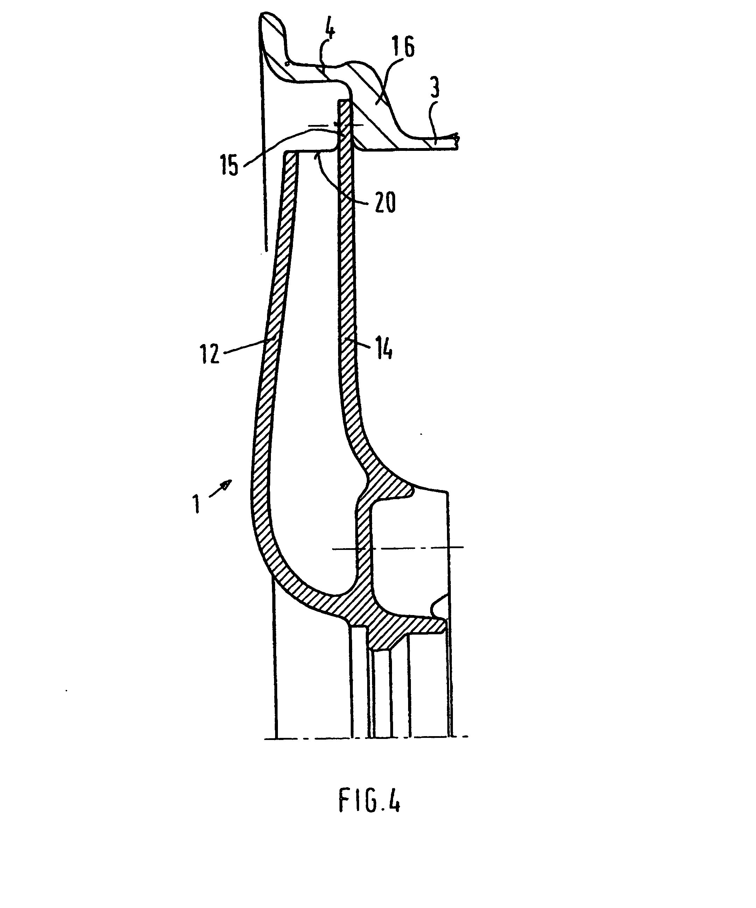

Der Felgenstern 1 weist gemäß der Fig. 2 und 3 eine außenliegende Wandung 12 mit einer Ring-Randfläche 13 auf, die vorragend zu einer innenliegenden Wandung 14 ausgeführt ist. Gemäß Fig. 4 ist die innenliegende Wandung 14 mit einer Ring-Randfläche 15 ausgeführt, die vorragend zu der außenliegenden Wandung 12 des Felgensterns 1 angeordnet ist.

Die Ring-Randfläche 13 bzw. 15 wird gemäß der Fig. 2 bis 4 mit einer Felge 3 verbunden. Diese weist hierzu am Felgenhorn 4 eine Schulter 16 mit einer der Ring-Randfläche 13 bzw. 15 gegenüberliegenden Verbindungsfläche auf.

Nach den Fig. 2 und 3 mit außenliegenden Ring-Randflächen 13 wird über die Felge 3 der Hohlraum 8b des Felgensterns 1 und der verbleibende Kern 8 überdeckt bzw. abgeschlossen.

Zur Sichtbarmachung der Hohlspeichen kann erfindungsgemäß vorgesehen sein, daß diese eine Öffnung 20 aufweisen, wobei diese Öffnung auch im Nabenbereich an der Außenwandung 12 der Hohlspeiche vorgesehen sein kann.

## Patentansprüche

1. Rad für ein Kraftfahrzeug mit in einem Felgenstern (1) zwischen Luftöffnungen angeordneten hohlen Speichen, wobei der Felgenstern (1) in einer aus einer Unterkokille (5) und einer Oberkokille (6) bestehendem Kokillenwerkzeug herstellbar ist und die hohlen Speichen im Felgenstern (1) einen verbleibenden Kern (8) aufweisen und im Gießzustand der Kern (8) über den Umfang des Felgensterns (1) mit einem Kernteil (K) radial herausragend zwischen der Unterkokille (5) und der Oberkokille (6) gelagert angeordnet ist und die Oberkokille (6) eine für das herausragende Kernteil (K) ausgebildete Aussparung (10) aufweist, die von der Unterkokille (5) dicht abgeschlossen ist, **dadurch gekennzeichnet, daß** der Felgenstern (1) eine Verlängerung der innenseitigen oder außenseitigen Wandung (14, 12) des Felgensterns (1) aufweist, um eine radial vorragende Befestigungsfläche (15; 13) zur Verbindung mit einer Felge (3) zu bilden.

2. Rad nach Anspruch 1, **dadurch gekennzeichnet, daß** die Ring-Randfläche (13, 15) des Felgensterns (1) mit einer Schulter (16) der Felge (3) verbindbar ist, die mit einer aufrechten Ringfläche an der Ring-Randfläche (13; 15) des Felgensterns (1) anliegt und mit der Felgenunterfläche den Hohlraum (8b) oder den Kern (8) abdeckt.

3. Rad nach einem der vorhergehenden Ansprüche, **dadurch gekennzeichnet, daß** die Ring-Randfläche (13; 15) des Felgensterns (1) zur Verbindung mit der Felge (3) und einem separaten Felgenhornteil (4) zu einem dreiteiligen Rad ausgebildet ist, wobei das Felgenhornteil (4) und die Felge (3) jeweils einen abgestellten Ringabschnitt zur Verbindung aufweisen.

4. Rad nach einem der vorhergehenden Ansprüche, **dadurch gekennzeichnet, daß** die Hohlräume (7) in den Speichen des Felgensterns (1) eine dem Felgenhorn (4) zugerichtete und von außen sichtbare Öffnung (20) aufweisen.

## Claims

1. A wheel for a motor vehicle with hollow spokes arranged in a rim spider (1) between air openings, wherein the rim spider (1) is producible in an ingot-mould tool comprising a lower ingot-mould (5) and an upper ingot-mould (6), and the hollow spokes in the rim spider (1) have a residual core (8), and in the cast state the core (8) is arranged projecting radially with a portion (K) beyond the periphery of the rim spider (1) and mounted between the lower ingot-mould (5) and the upper ingot-mould (6), and the upper ingot-mould (6) has an aperture (10) which is formed for the projecting core portion (K) and which is tightly closed off by the lower ingot-mould (5), **characterized in that** the rim spider (1) has an extension of the inner or outer wall (14, 12) of the rim spider (1) so as to form a radially projecting fastening face (15; 13) for connexion to a rim (3).

2. A wheel according to Claim 1, **characterized in that** the annular edge face (13, 15) of the rim spider (1) is connectable to a shoulder (16) of the rim (3) which rests with an upright annular face against the annular edge face (13; 15) of the rim spider (1) and covers the cavity (8b) or the core (8) with the under-surface of the rim.

3. A wheel according to one of the preceding Claims, **characterized in that** the annular edge face (13; 15) of the rim spider (1) is designed for connexion to the rim (3) and a separate rim-flange part (4) so as to form a three-part wheel, wherein the rim-flange part (4) and the rim (3) each have a respective projecting annular portion for connexion purposes.

4. A wheel according to one of the preceding Claims, **characterized in that** the cavities (7) in the spokes of the rim spider (1) have an opening (20) facing the rim flange (4) and visible from the outside.

## Revendications

1. Roue pour véhicule automobile comprenant des rayons creux disposés entre des ouvertures d'air d'une étoile de jante (1), l'étoile de jante (1) pouvant être réalisée dans un outillage coquille constitué d'une coquille inférieure (5) et une coquille supérieure (6), et les rayons creux dans l'étoile de jante (8) présentant un noyau fixe (8) et, à l'état de coulée, le noyau (8) étant logé entre la coquille inférieure (5) et la coquille supérieure (6) une partie de noyau (K) saillant radialement de la périphérie de l'étoile de jante (1), et la coquille supérieure (6) présentant un évidement (10) hermétiquement fermé par la coquille inférieure (5) et formé pour la partie de noyau (K) saillante, **caractérisée en ce que** l'étoile de jante (1) présente un prolongement de la paroi intérieure ou extérieure (14, 12) de l'étoile de jante (1) pour former une surface de fixation (15 ; 13) radialement saillante pour l'assemblage avec une jante (3).

2. Roue selon la revendication 1, **caractérisée en ce que** la surface de rebord annulaire (13, 15) de l'étoile de jante (1) peut être assemblée avec un épaulement (16) de la jante (3), qui par une surface annulaire verticale s'applique contre la surface de rebord annulaire (13 ; 15) de l'étoile de jante (1) et recouvre l'espace creux (8b) ou le noyau (8) par la face inférieure de jante.

3. Roue selon l'une quelconque des revendications précédentes, **caractérisée en ce que** pour l'assemblage avec la jante (3) et un élément de corne de jante (4) séparé, la surface de rebord annulaire (13 ; 15) de l'étoile de jante (1) est formée pour constituer une roue en trois pièces, l'élément de corne de jante (4) et la jante (3) présentant respectivement une section annulaire adaptée pour l'assemblage.

4. Roue selon l'une quelconque des revendications précédentes, **caractérisée en ce que** les espaces creux (7) dans les rayons de l'étoile de jante (1) présentent une ouverture (20) orientée vers la corne de jante (4) et visible de l'extérieur.
